# EUROPEAN PATENT SPECIFICATION

(11) **EP 4 367 594 B1**
(45) Date of publication and mention of the grant of the patent: **15.10.2025**
(21) Application number: 21752297.8
(22) Date of filing: 09.07.2021
(51) Int. Cl.: G06F 21/83

(54) **SYSTEM AND METHOD FOR SECURING KEYBOARD INPUT TO A COMPUTING DEVICE**
SYSTEM UND VERFAHREN ZUR SICHERUNG EINER TASTATUREINGABE AN EINER COMPUTERVORRICHTUNG
SYSTÈME ET PROCÉDÉ DE SÉCURISATION D'UNE ENTRÉE DE CLAVIER DANS UN DISPOSITIF INFORMATIQUE

(43) Date of publication of application: 15.05.2024
(73) Proprietor: New Millennium Technologies LLC, Tarpon Springs, Florida 34689 (US)
(72) Inventor: GARDINER, James Andrew, Oldsmar, Florida 34677 (US)
(74) Representative: Deambrogi, Edgardo
(86) International application number: PCT/US2021/041132
(87) International publication number: WO 2023/282915

(56) References cited:
- EP-A1- 3 532 980
- EP-B1- 3 532 980
- US-A1- 2007 182 714
- US-A1- 2016 323 314

## Description

### Technical Field

This document relates to the fields of computer security and anti-keylogging technology, and more particularly to anti-key logging technology that is suitable for operation on computing devices that may execute one or more applications wherein secure keyboard input is advisable, but such applications were not developed with secure keyboard input in mind.

### Background

Computing devices such as personal computers, portable computers, desktop computers, tablets, smart phones and devices of the like are used to maintain and manage sensitive private information. Individuals use these devices to pay bills, conduct shopping transactions of all varieties, manage banking and financial affairs, and interact with medical service providers, to name a few such activities involving sensitive personal information. The software and commercial third-party systems that individuals use to perform these tasks employ security schemes to secure their customers' information. User accounts are password protected, communication sessions are encrypted, databases employ role-based permissions, record all data entries, queries and other data manipulations, and encrypt data stored therein, and so on.

Security schemes of the sort just described are generally mathematically proven or demonstrated to be effective, and are thus secure against efforts aimed at penetration via front-line defenses. For example, modem encryption schemes cannot be defeated via mathematical analysis - only attack via exhaustion, which is not a feasible attack strategy in virtually any instance, is a theoretically possible means of illicit decryption. Nevertheless, vulnerabilities remain. Specifically, many attempts at compromising sensitive information focus on illicitly obtaining such information prior to it coming into initial management via such security systems. Keylogging is a common tactic that malefactors use to obtain sensitive information prior to it being encrypted, protected by password, or otherwise secured.

A keylogger is a unit of software that runs on a computing device without the knowledge of its operator. It surreptitiously records every keystroke entered by the device's user and communicates that information back to the malefactor typically via Internet communication. Thus, a keylogger permits a malefactor to obtain sensitive information before it is encrypted or password protected. Worse still, a keylogger may permit a malefactor to observe the keystrokes constituting a user's password. Armed with knowledge of a user's password, the malicious actor can log into corresponding systems and conduct transactions, such as financial transactions, in the name of the user. This is particularly pernicious because virtually all security systems predicate their effectiveness on the use of passwords. If a user's password is compromised, none of the other security steps are effective. Patent document EP3532980 discloses relevant prior art.

### Summary

Against this backdrop, the present invention was created. Herein is disclosed a system for securing keystroke data along a data path from a keyboard in data communication with a computer, to an application executing on the computer. The system includes a filter driver loaded in the memory of the computer. The filter driver is arranged as a part of a driver stack that includes a keyboard device driver, which is in data communication with the keyboard. The filter driver includes a body of software instructions for injection into the memory space of the application. The filter driver is configured to inject the body of software instructions into the memory space of the application. The filter driver also receives the keystroke data from the keyboard device driver, and generates ciphertext data from the keystroke data. Additionally, the filter driver is configured to send the ciphertext data to the body of software instructions while the body of software instructions is loaded within said memory space of the application. The system also includes the aforementioned body of software instructions, which is loaded within the memory space of the application. The body of software instructions is configured to obtain the ciphertext data from the filter driver, and to recover said keystroke data from said ciphertext data.

According to other embodiments, herein is disclosed a method of securing keystroke data along a data path from a keyboard in data communication with a computer, to an application executing on the computer. The method is performed by a filter driver and an injectable body of software instructions. The method includes creating, with said filter driver, a driver stack that includes the filter driver and a keyboard device driver. The filter injects the injectable body of software instructions into a memory space assigned to said application. The filter driver also receives the keystroke data from the keyboard device driver, and generates ciphertext data therefrom. The filter driver sends the ciphertext data to the body of software instructions, which is injected within the memory space assigned to the application. The body of software instructions, which is injected in the memory space assigned to the application, obtains the ciphertext data from the filter data, and it recovers the keystroke data therefrom.

According to other embodiments, herein is disclosed a system for securing keystroke data along a data path from a keyboard of a computer to an application executing on the computer. The system includes a filter driver arranged in a driver stack with a keyboard device driver that is in data communication with the keyboard. The filter driver is configured to receive the keystroke data from the keyboard device driver and to generate ciphertext data therefrom. The system also includes the aforementioned application, which is loaded into a memory space of the computer. The memory space is assigned to the application. The application does not include software instructions for recovering the keystroke data from the ciphertext data. The system also includes a means for recovering the keystroke data from the ciphertext data, and providing the keystroke data to the application. The aforementioned means resides within the memory space of the application.

### Brief Description of the Drawings

Figure **1** depicts exemplary embodiments of a computing environment.
Figure **2** depicts an exemplary keystroke security system, in accordance with certain embodiments.
Figure **3** depicts an exemplary method that may be executed by a system, such as the system of Figure **2****,** in accordance with certain embodiments.
Figure **4** depicts an exemplary keystroke security system, in accordance with certain embodiments.
Figures **5A-5D** depict an exemplary method that may be executed by a system, such as the system of Figure **4****,** in accordance with certain embodiments.
Figure **6A** depicts an exemplary structure of a dynamic link library, in accordance with certain embodiments.
Figure **6B** depicts a dynamic link library that has been altered to divert execution flow away from one of its exported functions or methods, according to certain embodiments.
Figure **7** depicts an exemplary computer that may be used in connection with any method or system disclosed herein, according to certain embodiments.

### Detailed Description

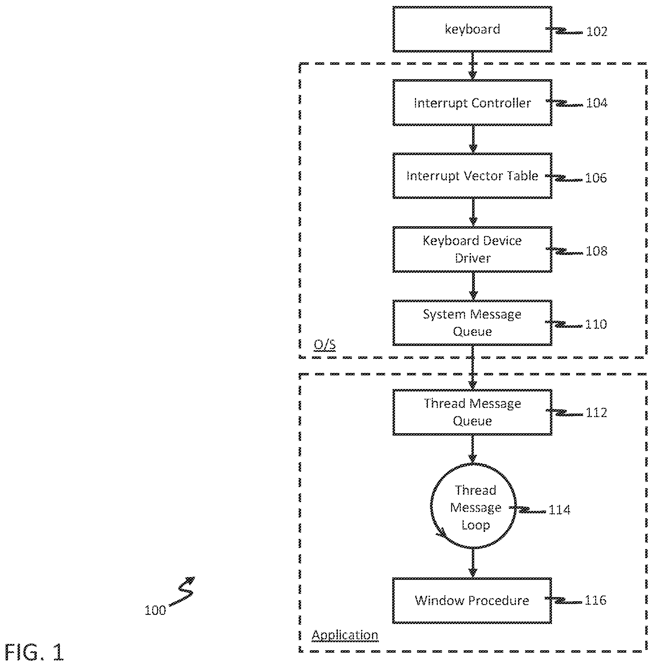

Figure **1** depicts an exemplary computing environment **100,** such as may be used in connection with a personal computer, desktop computer, laptop computer, tablet, smart phone, embedded computing environment, or the like. The environment **100** is arranged to receive keystroke input from a user, and illustrates the typical operation of such an environment in order to highlight certain areas of potential vulnerability in terms of compromise by a keylogger. The environment **100** of Figure **1****,** and the other environments disclosed herein, are described in particular and general terms that correspond to a MICROSOFT WINDOWS^{®} computing environment, although the invention is not limited to such environments. The invention relates to other environments and operating systems, including, without limitation, environments operated by MACOS^{®}, UNIX^{®}, LINUX^{®}, IOS^{®}, ANDROID^{®} or other operating systems. Those of skill in the art will recognize the general principles and teachings disclosed in this document and understand their applicability to such other operating systems and computing environments.

A user of the computing environment **100** enters keystroke input via a keyboard **102.** The keyboard **102** may be physically integrated with the computing device described by the environment **100** or may be separate therefrom and coupled thereto via a wired connection (example: via a Universal Serial Bus port, also known as a USB port) or via a wireless connection (example: via a BLUETOOTH^{®} connection). The keyboard **102** may be embodied as a traditional hardware keyboard or as a virtual keyboard, such as one implemented via a touchscreen. The keyboard **102,** and other keyboards discussed herein, are described as a hardware keyboards coupled via a wired connection for the sake of grounding the present discussion in a concrete example, although neither condition is necessary, and those of skill in the art will recognize the applicability of the principles and teachings herein to environments including virtual keyboards and/or wireless connections.

When the user depresses or releases a key on the keyboard **102,** the keystroke is represented as a scancode (a set of data indicating which particular keys on a keyboard have been pressed or released - typically unique from keyboard to keyboard) that is communicated to an input port of the computer described by the environment **100,** along with an interrupt signal. The interrupt signal is interpreted by the processor of the computing environment **100** as a hardware interrupt which is sent to an interrupt controller **104.** The interrupt controller **104,** in turn, references a specific location within an interrupt vector table **106** (determined by the specific port on which the interrupt signal was asserted), which contains the address of a keyboard device driver **108** that is to operate upon the aforementioned scancode data.

The keyboard device driver **108** retrieves the scancode data and converts it to a virtual key code, which is a data representation of the keystroke that may be translated, with the aid of other information, into data defining the character generated by the keystroke (example: the virtual key code data may be translated into ASCII or Unicode or UTF-8 data representing the character generated by the keystroke). In the wake of having converted the scancode into a virtual key code, the keyboard device driver **108** delivers the virtual key code data (along with other data) into a system message queue **110.**

The system message queue **110** is a queue maintained by the operating system of the computing environment **100** to hold messages representing user input events (example: a keyboard key press, a keyboard key release, a mouse click, a movement of the mouse, and so on) and system events (example: detection of a new peripheral device, such as a thumb drive, having been plugged into a port, such as a USB port, a transition of the operating system into a different power state, such as a transition of the operating system into a low-power state, and so on). The virtual key code data is entered into the queue **110** as a message communicating the occurrence of a particular keystroke having been input by the user. The operating system executing within the environment **100** determines the active process and thread, along with the particular window that is in focus. For example, it may be the case that a word processor is the active process, and the process may have spawned a new thread to open a "Print Document" window in response to a user having selected the "Print" option from the "File" menu, in which case, the "Print Document" window would be determined by the operating system to be in focus, while the particular thread that created the "Print Document" window would be determined to be the active thread. The operating system makes these determinations because the keystroke was intended by the user as input to the particular window that was in focus at the time he input the keystroke, and the operating system must direct the virtual key code data to that particular window via the particular mechanisms appropriate for the architecture of the particular operating system executing on the computing environment. Continuing on with the example, it may be the case that the keystroke entered by the user was a "2," and the intended input field was the "Copies" field of the "Print Document" window, meaning that the user was intending to have a "2" character entered visibly into the "Copies" field, in order to indicate that he desired two copies of the document open in the word processor application to be printed. In the context wherein the computing environment **100** is operated by the WINDOWS^{®} operating system, the operating system will have created a thread message queue **112** for any given thread responsible for having created a window, meaning that the aforementioned exemplary thread responsible for creating the "Print Document" window will have a thread message queue **112** associated with it, inside the application memory space associated the process providing the word processing application. The operating system removes the aforementioned message containing the virtual key code from the system message queue **110** and enters it into the thread message queue **112.**

Each thread responsible for having opened a window will have a thread message loop **114.** Thus, continuing on with the example, the particular thread responsible for opening the "Print Document" window would include a thread message loop **114.** The thread message loop **114** is a loop that polls for the presence of a message in the thread message queue **112,** and in response thereto, withdraws such message, and sends it to a proper procedure **116** to handle the message. A procedure **116** is a unit of code, such as a function or method, that corresponds to a window and properly responds to a message of a particular species. In the context where the species of message withdrawn from the queue **112** by the loop **114** is of a sort that indicates the entry of a virtual key code, logic within the loop **114** determines that the message pertains to keyboard input of a character to be displayed in an input field, and sends the message to a particular procedure **116** that would translate the virtual key code into ASCII data or Unicode data, etc., and direct such translated data to the particular field of the particular window that is in focus, resulting in the character "2" being entered in the "Copies" field.

To summarize, keystroke data (whether it is in the form of a scancode, virtual key code, or ASCII/Unicode/UTF-8) generally traverses a path from a keyboard **102,** to a keyboard device driver **108,** to a system queue **110** in the operating system, to a queue **112** in application memory space. This general pathway for keystroke data is typical across computing environments and operating systems. It is the job of the software instructions making up a given application to retrieve keystroke data from the queue **112** within the application memory space by polling for the presence of keystroke data in the queue **112,** and to handle such data properly.

Given this general scheme for routing of keystroke data, it is a common strategy for a keylogger to attempt to obtain keystroke data from the queue **110** maintained by the operating system, because all keystroke data passes through that particular queue **110** - meaning that a successful compromise of the queue **110** would permit the keylogger to access all keystroke data entered by the user, no matter the context of such keystroke input. For similar reasons, it is a common strategy for keyloggers to attempt to obtain keystroke data from the various queues **112** within each of the respective memory spaces of the various applications executing on the computing environment **100.** Given that such queues **112** are created by an operating system, and further given that there are but a handful of commonplace operating systems, these queues **112** have predictable structures determined by the identity of the particular operating system executing on the target computing environment **100,** and consequently can be compromised in a predictable, uniform manner.

Keyloggers are constructed with the benefit of knowledge of other certain facts that typically inform the strategies by which they operate. Presently, it is the case that the publishers of data security software products are different entities than the publishers of popular applications in which keystroke data is typically entered ("target applications"). Publishers of data security software do not also publish word processors, web browsers, banking software, and so on. As a practical matter, this means that strategies for securing keystrokes - employed by publishers of data security software products - typically need to be of a nature such that they operate without coordination or cooperation on the part of the publisher (or developer) of any particular target application into which keystroke data is to be entered. This means that the keystroke data will not be routed to the various target applications executing on the computing environment in encrypted form, because as a practical reality, the publisher of the data security product cannot rely upon the publishers or developers of the target applications having included the proper corresponding decryption routines in their software products. Moreover, the keystroke data will not typically be routed to the various target applications executing on a computing platform via atypical data routes, because such a strategy normally would require the publishers or developers of the various target applications to have authored their applications so as to retrieve the keystroke data from such atypical data routes. Again, a publisher of a commercially successful data security software product that has as its purpose the goal of securing keystroke data across target applications must assume that its security product will not have the benefit of cooperation or coordination from the target applications that its security product is intending to interoperate with and secure. This means that the author of a keylogger understands that it is usually the case that, on a given computing environment, even should a particular target application contain code enabling the secure routing of keystroke data along its entire journey from the keyboard device driver to its memory space, the computing environment will almost assuredly contain other applications that do not contain such code, meaning that keystroke data destined for such applications can be successfully compromised.

According to some embodiments, the keystroke data security methods and systems disclosed herein secure keystroke data destined to various target applications executing on a computing environment, without requiring cooperation or coordination on the part of the publishers (or developers) of such target applications. According to some embodiments, such security methods and systems may include encryption of such keystroke data along its route to the target application's memory space, so that such keystroke data is delivered to the memory space of a given target application in encrypted form, despite the aforementioned lack of cooperation or coordination on the part of the publisher or developer of the target application. According to some embodiments, such security methods and systems may include routing of such keystroke data along its route to the target application's memory space in a manner that differs from the route imposed by the operating system executing upon the computing environment, despite the aforementioned lack of cooperation or coordination on the part of the publisher or developer of the target application.

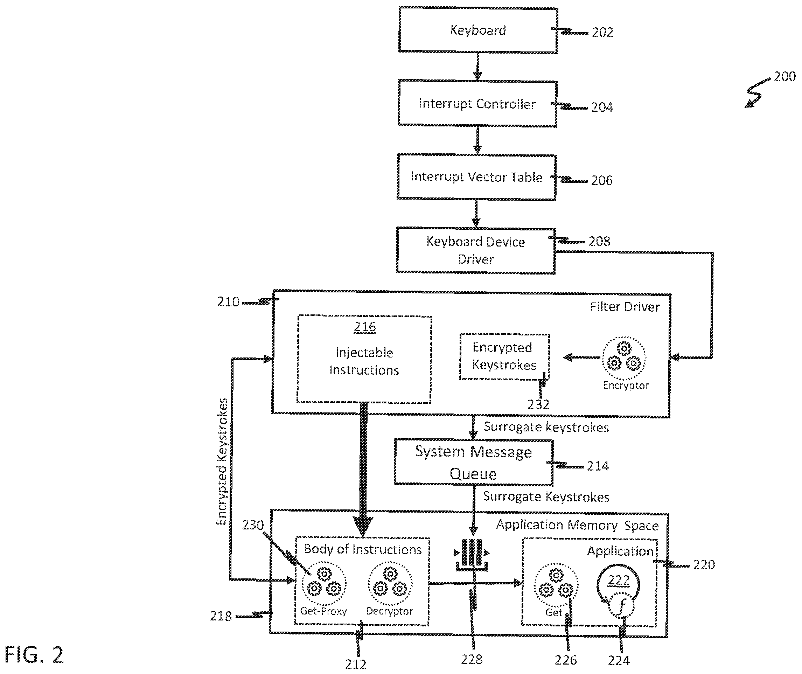

Figure **2** depicts certain exemplary embodiments of a keystroke security system **200** that delivers encrypted keystroke data into the memory space **218** of an application **220** along an atypical data pathway, i.e., a data pathway that differs from the particular pathway ordinarily determined by the operating system executing on the computing environment in which the system **200** is situated. As used in description of the various embodiments of the systems disclosed here, the term "keystroke data" refers generally to scancode data, virtual key code data, ASCII data, Unicode data, UTF-8 data, and any other data format that represents the keyboard keys depressed or released by a user, the intent or purpose of such depression or release, or the character or characters represented by such depression or release. In other words, the term "keystroke data" is used herein as a broad term in circumstances where narrower terms would also apply. Those of skill in the art will readily understand which particular narrower terms apply based on circumstance and context.

The keystroke security system **200** includes a filter driver **210** and body of security software instructions **212** that interoperate to secure keystroke data. Keystrokes are entered by a user via a keyboard **202,** and the resultant keystroke data traverses a path from the keyboard **202,** to an interrupt controller **204,** and to a keyboard device driver **208** (located by an interrupt vector table **206**), in a manner parallel to that described with reference to Figure **1****.** In a point of departure from the operation of the computing environment **100** of Figure **1****,** in the context of the system **200** of Figure **2****,** keystroke data is delivered from the keyboard device driver **208** to a filter driver **210,** as opposed to being delivered therefrom to a system message queue **214** maintained by the operating system. A filter driver is a body of software that executes with kernel-level permissions (also referred to as operating "in kernel mode" or "at the kernel level"), and that has registered itself with the operating system to introduce itself as part of a driver stack, so that it is invoked with the output of another designated driver, in the wake of that particular designated driver having operated previously. In the context of the system **200** of Figure 2, the filter driver **210** has registered with the operating system to introduce itself as a constituent of a driver stack that includes the keyboard device driver **208** as the designated previously-operating driver, so that the filter driver **210** is invoked with the output of the keyboard device driver **208** (i.e., with the keystroke data output by the keyboard device driver **208**) after completion of its execution. Thus, by virtue of the filter driver **210** having added itself to a driver stack including the keyboard device driver **208,** the keystroke data returned by the keyboard device driver **208** is delivered to the filter driver **210** in lieu of being delivered to the system message queue **214.**

The system **200** of Figure **2** also includes a body of security software instructions **212.** The body of security instructions **212** is initially contained within the filter driver **210** memory space, and is introduced by the filter driver **210** into memory space **218** assigned to an application **220.** During use, the filter driver **210** encrypts the keystroke data as it receives such data. The body of security instructions **212** interoperates with the filter driver **210** to retrieve the encrypted keystroke data, decrypt such data from within the memory space **218** assigned to the aforementioned application **220,** and deliver the unencrypted keystroke data to the application **220** so that it is handled properly.

Significantly, the application **220** and filter driver **210** may be developed and published by different parties, that may operate with complete independence from one another. The application **220** may receive the benefit of secured keystroke handling, including atypical keystroke data routing and encryption protection extending into its memory space **218,** despite having been developed without any cooperation or coordination with the developers or publishers of the filter driver **210.** For example, the application **220** is not required to include a library or framework or other body of code originating from the developer or publisher of the filter driver **210,** in order to receive the benefit of interoperation with the filter driver **210.**

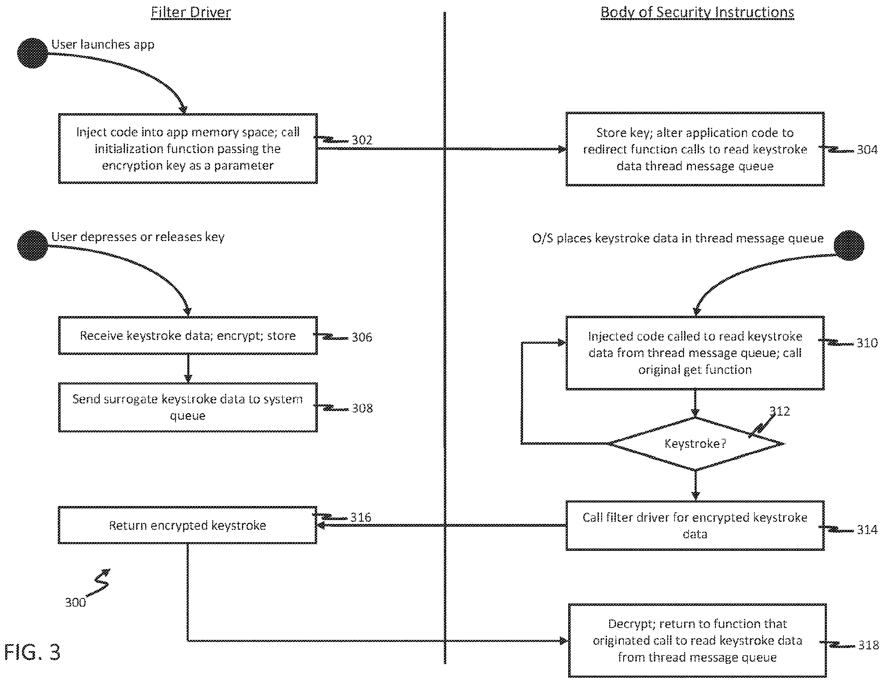

According to some embodiments, the system **200** of Figure **2** operates pursuant to the exemplary method **300** of Figure **3****.** The method **300** of Figure **3** is initiated in response to a user of the computing environment on which the system **200** is resident launching an application. In response to the user launching an application, the filter driver **210** introduces the body of security software instructions **212** into the application memory space **218,** and invokes its initialization function or method (operation **302**). (Recall: the application **220** was not authored in view of the aforementioned instructions **212** - it contains no reference to such instructions **212,** and in the absence of such invocation by the filter driver **210,** the instructions **212** would otherwise not be executed.) According to some embodiments, the aforementioned initialization function or method accepts an encryption key as an input or argument or as an element of it signature, and the filter driver **210** invokes the initialization function or method with an encryption key that the body of security software instructions **212** is to use in connection with its operations relating to decrypting ciphertext keystroke data. To the extent that a key must be used by the instructions **212,** such a key may be acquired in other manners that will readily present themselves to the minds of those of skill in the art. For example, the instructions **212** may be invoked with a uniform resource locator (URL) as an input or argument, and may interact with a network-or-web-accessible endpoint designated by such URL in order to acquire the aforementioned key. According to some embodiments, the filter driver **210** and instructions **212** cooperate in an encryption-decryption scheme that does not require communication of a key. For the sake of grounding the present discussion in a concrete example, the discussion proceeds as though the encryption-decryption scheme requires the use of a key.

In the wake of invocation with the encryption key, the body of security software instructions **212** stores the key (operation **304**). It also alters the software instructions making up the application **220** so that its flow of execution is diverted as it relates to acquiring keystroke data from the thread message queue **228** - instead of executing a sequence of instructions that are part of or referred to by the application **220,** itself, in order to acquire such keystroke data, the application **220** is altered so that the body of security software instructions **212** will execute in such circumstances. For example, as explained previously, the application **220** contains at least one thread message loop **222.** As also previously explained, the thread message loop **222** includes a reference instruction **224** (example: a "call" instruction associated with an address) to a function or method **226** (a "get" function or method **226**) that looks for a keystroke data message in the queue **228** and returns such keystroke data in the event that such a message is found, i.e., the "get" function or method **226** "gets" the keystroke data from the queue **228.** The loop **222** ordinarily operates so as to repeatedly execute the reference instruction **224,** and thereby check the queue **228** for the presence of a keystroke data message, and to return such keystroke data, if it exists, so that it may be properly handled by the application **220.** The body of security software instructions **212** may alter the instructions constituting the application **220** so that when the reference instruction **224** pointed at the "get" function **226** is executed, the flow of operation is diverted so that a proxy "get" function or method **230** within the body of instructions **212** is executed instead. Thus, in the wake of such alteration, the loop **222** repeatedly invokes (directly or indirectly) the proxy "get" function or method **230,** instead of the original "get" function **226** that is part of the application **220.** The purpose and effect of this alteration is described below. In the wake of operation **304** having been performed, the keystroke security system **200** is prepared for use.

In use, the keystroke security system **200** operates with each depression or release of a keyboard key, with each such depression or release resulting keystroke data being received by the filter driver **210,** by virtue of the previously-described concerted actions of the keyboard **202,** interrupt controller **204,** and keyboard driver **208** (operation **306**). In response to receipt of such keystroke data, the filter driver **210** encrypts such keystroke data and stores the resulting ciphertext **232** in the memory space used by the filter driver **210.** Next, in operation **308,** the filter driver **210** delivers surrogate keystroke data to the system message queue **214** maintained by the operating system. The surrogate keystroke may be created by the filter driver **210** so as to be pseudorandom or deterministic. Such surrogate data does not correspond to the keystroke data received by the filter driver **210** and cannot be used to reconstruct such keystroke data.

In response to the filter driver **210** having delivered the aforementioned surrogate keystroke data to the system message queue **214,** the operating system introduces the surrogate keystroke data into the thread message queue **228** residing within the application memory space **218.** With each execution cycle of the thread message loop **222,** the reference instruction **224** is executed, and by virtue of the diversion of flow resulting from operation **304,** the proxy "get" function or method **230** within the body of security software instructions **212** is executed. In turn, the proxy "get" function or method **230** invokes the original "get" function or method **226,** which accesses the queue **228** to withdraw any keystroke data message therefrom. If the queue **228** in fact contained such keystroke data message, then the keystroke data is returned to the proxy get function or method **230,** and the flow of execution is returned to the proxy function or method **230,** as well (else, control is returned to operation **310**) (see operation **312**).

Assuming that a keystroke data message was retrieved in operation **310,** then the proxy "get" function **230** interprets this as an indication that there is a ciphertext keystroke datum **232** for it to retrieve, as there is a one-to-one correspondence between a keystroke datum having been encrypted and a surrogate keystroke having been introduced into the system message queue **214.** Thus, the proxy get function **230** responds by calling the filter driver **210** for the ciphertext keystroke datum corresponding to the keystroke that was just input by the user (operation **314**), and the filter driver **210** returns the requested ciphertext keystroke datum to the proxy "get" function **230** (operation **316**). The proxy "get" function **230** decrypts the ciphertext keystroke datum using the key stored during operation **304** and returns the plaintext keystroke datum to the reference instruction **224,** whereupon execution flow is returned to the thread message loop **222** (operation **318**). The thread message loop **222,** in turn, invokes the proper procedure to handle the plaintext keystroke datum, and the user experiences an ordinary response to having input a keystroke despite its corresponding keystroke datum having traversed an atypical data route, and having been delivered into the application memory space **218** in an encrypted form. As can be intuited from the foregoing description, the purpose of diverting the execution flow from the original "get" function or method **226** to the proxy **230** is to trigger the retrieval and decryption of the ciphertext keystroke datum.

The net result of the structure of the system **200,** when considered together with its various actions **300,** is that keystroke data entered by its user is securely delivered to the memory space **218** of any given application **220** that may happen to be executing on the computing environment in which the system **200** is situated. Such keystroke data is encrypted along its journey, and is delivered into the memory space **218** of the application **220** as a ciphertext, despite the fact that the application **220** may not have been authored with a corresponding decryption function or method. Moreover, the keystroke data is routed to the aforementioned memory space **218** along an atypical data route, again, despite the fact that the application **220** may not have been authored with a corresponding function of method by which to participate in retrieving such keystroke from such atypical data route.

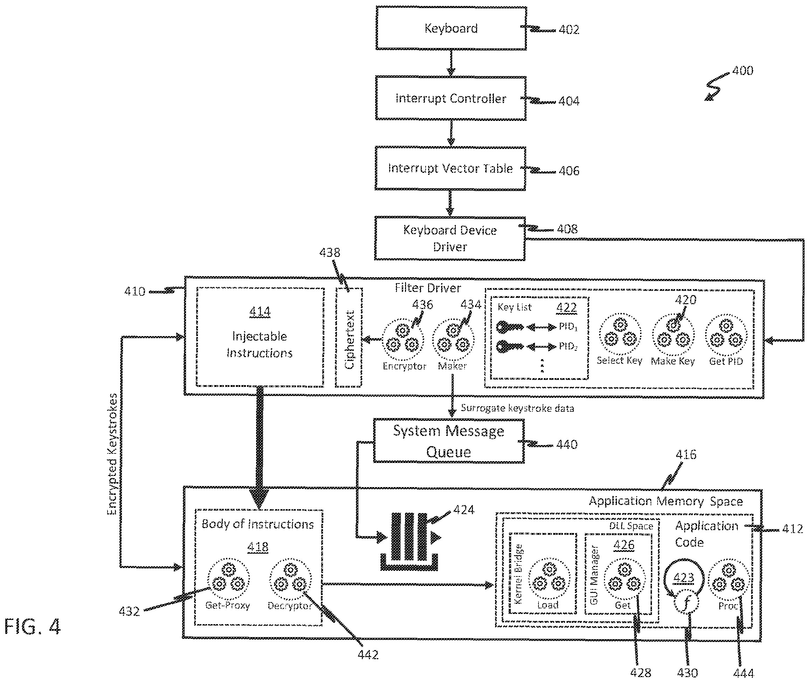

Figure **4** depicts other embodiments of a keystroke security system **400,** in accordance with the principles disclosed herein. The system **400** includes a keyboard **402,** interrupt controller **404,** interrupt vector table **406** and keyboard device driver **408,** all of which participate in the handling of keystroke data as described previously. For the sake of brevity, their respective roles in handling keystroke data are not repeated here. The system **400** also includes a filter driver **410** that introduces itself into a driver stack along with the keyboard device driver **408,** in the same manner, and to the same effect, as described above. Again, for the sake of brevity, no discussion pertaining to this matter is repeated here.

Attention is once again drawn to the fact that the system **400** and its actions **500** are described in both general and specific terms in terms that prevail in a context in which the system **400** is situated within a MICROSOFT WINDOWS^{®} computing environment. As stated previously, this need not be the case, and this choice of operating system is made exclusively for the purpose of anchoring the discussion in a concrete example. The teachings herein can be applied to a computing environment controlled by any given operating system.

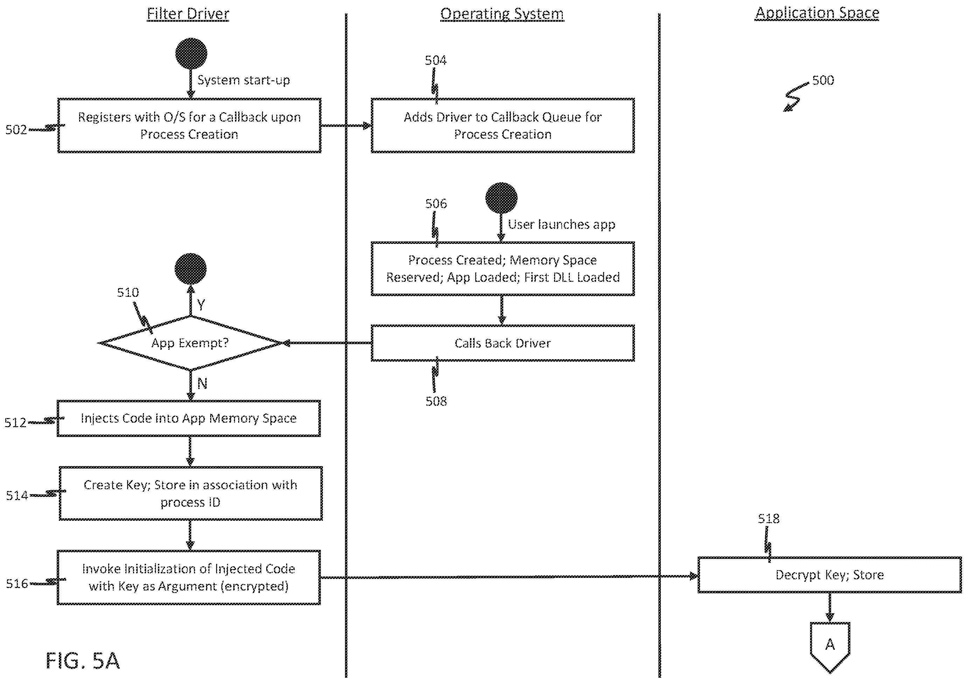

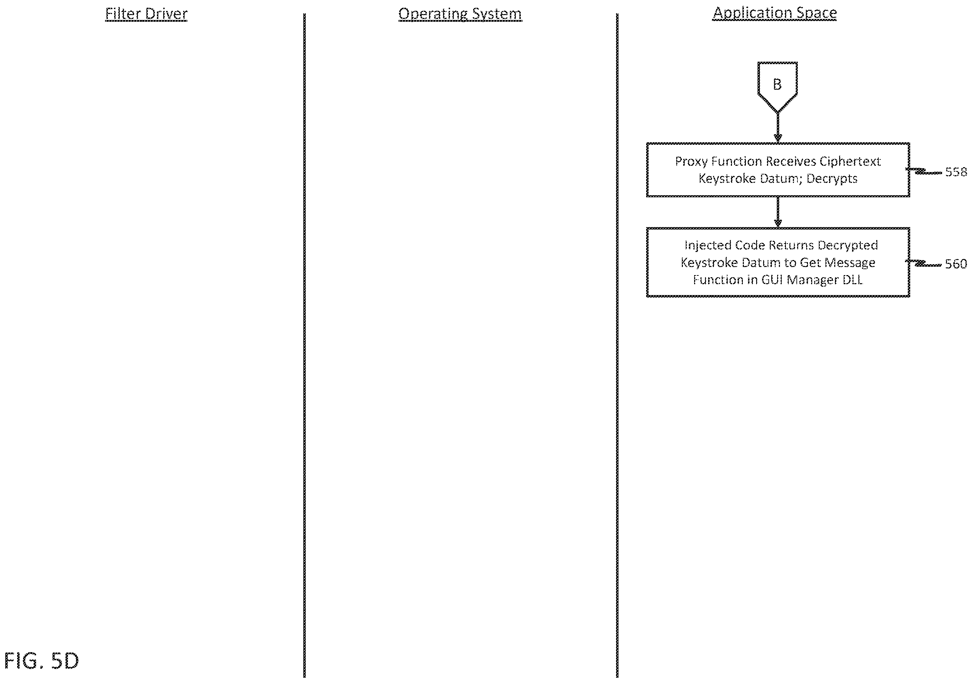

The system **400** of Figure **4** operates according to the method **500** of Figures **5A-****5D.** Upon the system **400** having successfully started up under the control of the particular operating system installed thereon, the filter driver **410** makes a call to the operating system to request that it be called back each time the operating system constructs a new process (operation **502**). In response, the operating system adds the filter driver **410** to its callback queue, along with any other methods or functions of any other processes that are also to be called back in the event that a new process is constructed (operation **504**). The effect of operations **502** and **504** is that the filter driver **410** will be invoked each time the operating system creates a new process, which occurs with the launch of each application. Therefore, by virtue of operations **504** and **506,** in response to a user launching an application, such as application **412,** the operating system responds by performing its routine series of operations connected with creating a process - it assigns the application a process identifier ("process ID"), assigns it a region of memory to operate within, loads the application code therein, and so on (operation **506**) - and, in addition to performing such routine actions, the operating system calls back the filter driver **410** (operation **508**), passing the name of the process and process ID assigned thereto, among other information, to the filter driver **410** as arguments or as the payload of the call, itself.

In response to having been invoked, the filter driver **410** examines the process name passed to it in the preceding operation **508** against a list of exempt processes (operation **510**). The aforementioned list contains the names of processes with which, for one reason or another, the security system **400** is not to interoperate. Such list may be stored internally in the memory space of the filter driver **410** (and updated with each new version download of the filter driver **410**), or may be made available to it via a network-or-web-accessible endpoint that it may access to acquire such list. In the event that the filter driver **410** is invoked with a payload including a process name included in the aforementioned list, this indicates that the system **400** is not to interfere with the ordinary handling of keystroke data destined for such process. Therefore, the filter driver **410** takes no further action. On the other hand, if no such match is identified, this indicates that the keystroke security system **400** is to secure keystroke data destined for the process, and therefore the system **400** should conduct its various operations. Thus, control is passed to operation **512.**

In operation **512,** a body of injectable security software instructions **414** contained in the memory space of the filter driver **410** prior to execution of operation **512** is copied into the memory space **416** of the application **412,** and, in the wake of operation **512,** exists in such memory space **416** as a body of security software instructions **418.** For example, the filter driver **410** may command the operating system to permit the filter driver **410** to impersonate the application **412** that filter driver **410** is seeking to secure with keystroke protection. Thereafter, the filter driver **410** may allocate a region of memory of sufficient size to store the aforementioned injectable security software instructions **414.** By virtue of the impersonation granted it by the operating system, the allocated memory region is assigned within the application's **412** memory space (as opposed to within the filter driver's **410** memory space). The filter driver **410** copies a region of memory commencing at the start of the injectable instructions **414** and concluding at end of such instructions **414** to the allocated region. The result is that the injectable security software instructions **414** are introduced into the memory space **416** of the application **412.** Other methods of injecting the software instructions **414** into the aforementioned memory space **416** exist, which will readily present themselves to those of skill in the art, and such other methods are contemplated herein. Moreover, those of skill in the art will understand that such methods vary in implementation details from operating system to operating system.

Next, in operation **514,** an encryption key generator **420** method or function is invoked to generate an encryption key that will be used as an input to an encryption process employed by the filter driver **410** upon keystroke data *en route* to the application **412.** The key is stored in a key storage facility **422** so that it is associated with the process ID of the particular application **412,** the launch of which was effectuated by the operating system in operation **506.** To summarize: a user launches an application **412** such as by double-clicking on its icon; the operating system creates a process to manage the execution of the application **412,** assigns it the various computing assets it will need to run (a process ID, a memory space **416,** and so on), and prepares the memory space **416** for execution of the application (loads the application code **412** into such memory space **416,** and so on); the operating system calls back the filter driver **410** with the aforementioned process ID and process name; the filter driver **410** generates a key for the new application (assuming that the filter driver **410** is to interoperate with such application), and stores the key in a key facility **422** so that it is associated with the aforementioned process ID. Thus, by virtue of the foregoing actions, each application executing on the computing environment is assigned its own encryption key. The process ID of any such application may be used as an input to the key facility **422,** in order to retrieve the encryption key corresponding to such process ID. For example, the key facility **422** may be organized as a key-value pair facility, or as a simple array facility, and so on. The advantage of encrypting keystroke data with a key unique to each application is discussed later.

After having introduced the body of security software instructions **418** into the just-launched application's **412** memory space **416** (operation **512**), and created the encryption key for use in connection with such application **412** (operation **514**), the filter driver **410** invokes an initialization function or method within the body of the instructions **418,** passing the aforementioned key as an argument of such function or method invocation (operation **516**). For example, the filter driver **410** may calculate the address of the entry point of such initialization function or method by summing together: (1) the base address at which the body of instructions **418** was loaded; and (2) an offset value known to correspond to the offset between the beginning of the body of instructions **418** and the entry point of such initialization function or method. The calculated address value may then be queued as a function pointer for invocation by the operation system. According to some embodiments, the filter driver **410** encrypts the aforementioned key prior to passing it as an argument to the initialization function or method of the injected instructions **418,** such as with the 256-bit advanced encryption standard (AES-256) or with the use of another comparable encryption standard. The present discussion assumes that the key was, in fact, encrypted prior to having been passed to the aforementioned initialization function or method, meaning that it was passed as a cryptogram. As stated previously, this need not be the case.

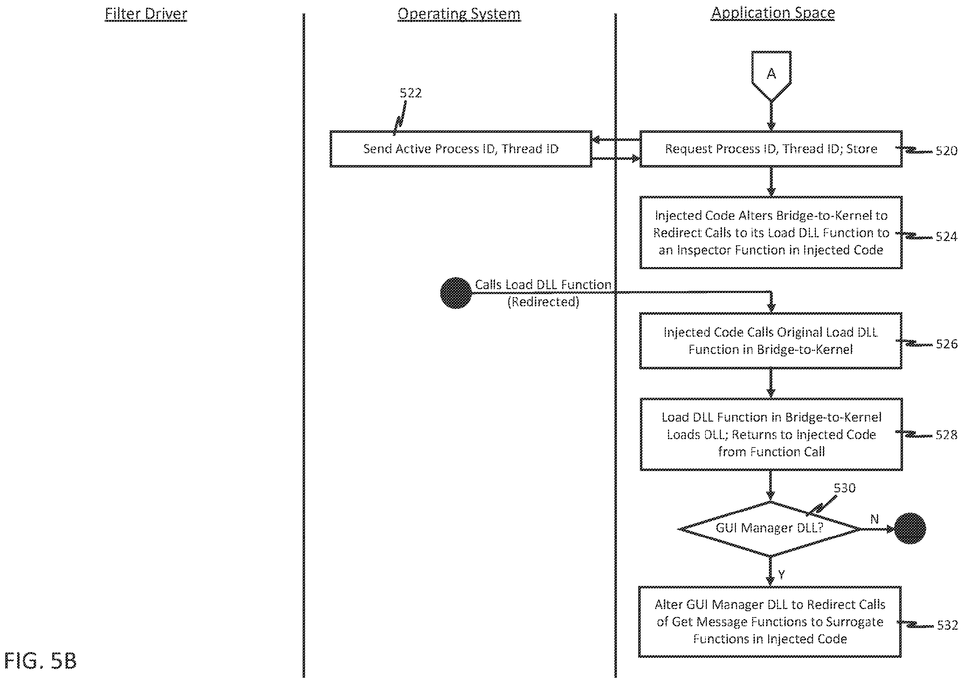

In response to invocation of the initialization function or method, control is passed to operation **518,** and the injected instructions **418** respond by decrypting the cryptogram that was passed to it in connection with its invocation, thereby recovering the aforementioned key. To permit such decryption, it may be the case that the injected instructions **418** contain the decryption routines - along with the requisite key - that are the counterpart to those used to encrypt the key in the previous operation **516.** After having recovered the key via the decryption process, it is stored. Next, in operation **520** (Figure **5B**), the injected instructions **418** request the operating system to inform it of the process ID of the application **412** and the thread ID assigned to the particular thread under which the injected instructions **418** are executing; the operating system respond (operation **522**), and the process ID and thread ID are stored. As is discussed below, keystroke data encryption is determined on the basis of: (1) information that varies from application-to-application (key and process ID), but not keystroke-datum-to-keystroke-datum; and (2) information that varies from keystroke-datum-to-keystroke-datum (so that a particular keystroke does not always result in the same ciphertext). The net result of operations **518** and **520** is that the injected instructions **418** obtain that portion of the information that does not vary from keystroke-datum-to-keystroke-datum.

Prior to discussion of operation **524,** some background discussion is in order. Previously, in connection with discussion of operation **506,** it was stated that, as a part of launching an application, the operating system loads the application's software code **412** into the memory space **416** assigned to it. The operating system uses a loader to perform this task. The loader, in turn, is partially constituted of one or more functions or methods within a dynamic link library (DLL) that the operating system copies into the memory space **416.** Thus, to conduct the task of loading an application's software code into memory space, the operating system first copies the aforementioned DLL (which functions as a bridge between the application and the kernel of the computing system) into the memory space **416,** and then invokes its functions in order to effect loading of the application code **412.** The aforementioned DLL is referred to herein as a "bridge to the kernel." The bridge to the kernel contains another function or method that is used to load any other particular DLL required by the application **412** into the application's **412** memory space **416.** For the sake of providing the aforementioned function or method a name, it will be referred to herein as "Load_DLL." When a particular DLL is to be loaded into the memory space **416,** Load_DLL is called with an argument or input into the invocation identifying the particular DLL to be loaded. In operation **524,** the bridge to the kernel is altered so that an invocation of Load_DLL is redirected to a proxy function or method contained in the injected body of instructions **418.** Thus, the net result of operation **524** is that, with each occasion of a load of a DLL into the memory space **416,** the aforementioned proxy function (which, for the sake of providing it with a name, is referred to herein as "Load_DLL_Proxy") is invoked.

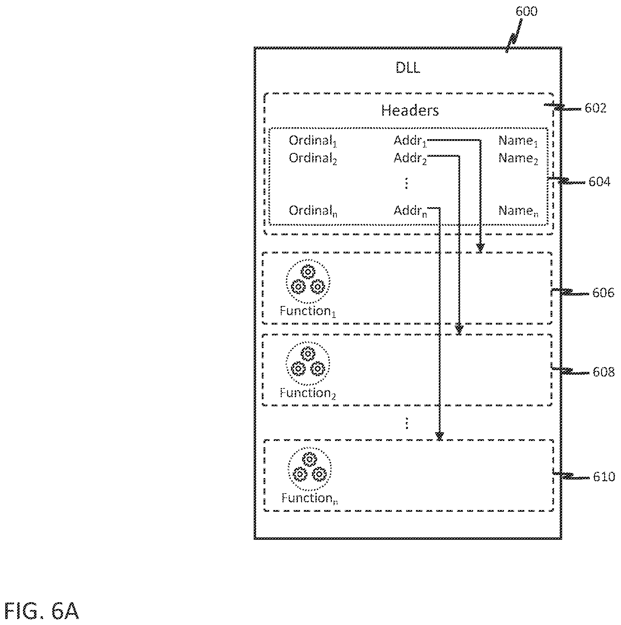

The task of diverting execution flow resulting from a call to a function or method in a DLL, such as is performed in connection with operation **524,** may be performed in various manners, the details of which may vary from operating system to operating system. For the sake of providing an example, discussion turns to Figure **6A****,** which depicts, at a high level of abstraction, an example of one possible generic structure of a DLL **600.** As can be seen from Figure **6A****,** a DLL **600** includes a section or plurality of sections that, in turn, include various headers **602.** Contained within the section or sections **602** is an export directory or exported functions/methods table **604.** The export directory **604** contains one or more entries - one entry for each function or method that is invocable by an application with which the DLL is dynamically linked (any function or method contained in the DLL **600** that does not have a corresponding entry in the directory **604** is invocable exclusively by other functions contained within the DLL **600**). Each function or method that is invocable by an application with which it is dynamically linked is an "exported function or method."

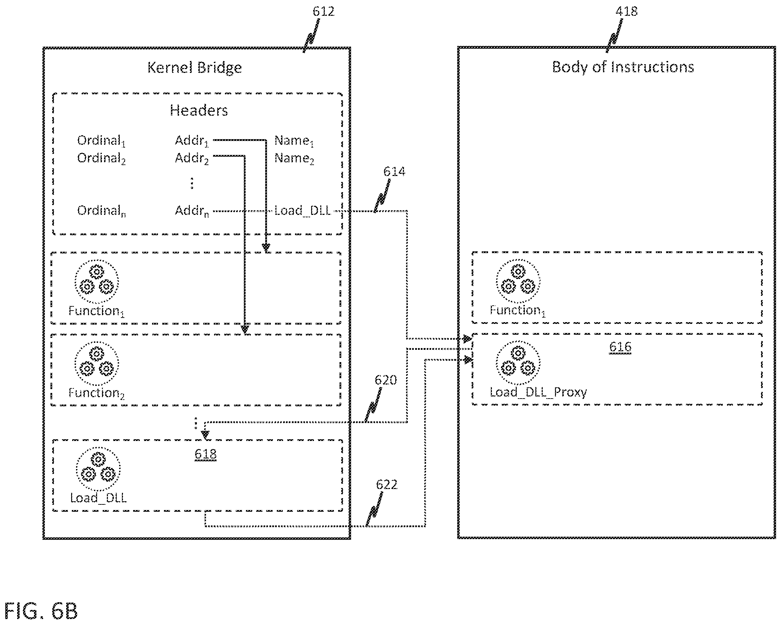

The DLL **600** also includes software code making up the various exported functions or methods **606, 608** and **610** contained therein. As can be seen from Figure **6****,** the various exported functions or methods **606, 608** and **610** are stored in the DLL **600** in an order: function or method **606** is first; function or method **608** is second, and function **610** is the *n*^{th} exported function or method contained therein. Thus, each function or method **606, 608** and **610** can be referred to by an ordinal describing its position within the DLL **600** (in addition to being referred to by its function or method name).

Returning to the topic of the export directory **604,** each entry includes, among other units of information: (1) the aforementioned ordinal corresponding to the function or method **606, 608,** or **610** to which it corresponds; (2) the address in memory at which such function or method begins; and (3) the name of such function or method. At runtime, a given exported function or method is executed by accessing the export directory **604** with the ordinal corresponding to the particular function or method to be invoked, finding the corresponding memory address of such function or method, and then using such memory address as the subject of a "call subroutine" command.

Discussion now turns to Figure **6B****,** which depicts, at a high level of abstraction, the bridge to the kernel **612,** in the wake of having been altered so as to divert an invocation of its Load_DLL function or method **618** to an invocation of Load_DLL_Proxy **616,** instead. As can be seen from Figure **6B****,** the particular entry in the export directory corresponding to the Load_DLL function or method **618** has been altered, so that the address information therein refers (or "points") to the beginning of the Load_DLL_Proxy function or method **616** contained in the body of injected instructions **418.** (Such alteration is depicted by dotted line **614**). Consequently, during runtime, each time the Load_DLL function or method **618** is invoked, the adjusted address information - which points to Load_DLL_Proxy **616** in the wake of such adjustment - is retrieved from the export directory and used as the subject of a "call subroutine" command, meaning that the Load_DLL_Proxy function or method **616** is called, instead of Load_DLL **618.** Upon having been called, the Load_DLL_Proxy function or method **616** calls the Load_DLL **618** (see operation **526** in Figure **5B**), which was the original intended target of the call (this call is depicted by dotted line **620**). Therefore, Load_DLL 618 executes and loads the designated DLL into the memory space **416** of the application **412.** At the conclusion of its execution path, Load_DLL **618** executes a "return from subroutine" command, causing it to return execution to the calling function, i.e., the Load_DLL_Proxy function or method **618** (this is depicted by dotted line **622**) (see operation **528** in Figure **5B**). Upon having execution returned to it, Load_DLL_Proxy **616** examines the particular DLL just loaded into the memory space **416** by Load_DLL **618** in operation **528** to determine whether it is the particular DLL that contains the functions or methods to examine or withdraw keystroke data from the thread message queue **424** (see operation **530** in Figure **5B**). For example, in the context of a computing system operated by MICROSOFT WINDOWS^{®}, a GUI manager DLL **426** (example: user32.dll) contains certain functions or methods (example: GetMessage **428** or PeakMessage) that are invoked by a reference **430** thereto in the application's **412** thread message loop **423.** GetMessage **428,** when invoked, withdraws a keystroke data message from the queue **424** and returns it to the calling function (i.e., the thread message loop **423**). If the particular DLL loaded by Load_DLL **618** in operation **528** was not the one that contains the functions or methods to examine or withdraw keystroke data from the thread message queue **424,** then it is disregarded. On the other hand, if the particular DLL loaded by Load_DLL **618** in operation **528** was, in fact, the particular DLL that contains the functions or methods to examine or withdraw keystroke data from the thread message queue **424** (example: if the loaded DLL was the GUI Manager DLL **426**), then the injected instructions **418** alters such DLL **426** so that invocation of its aforementioned functions (each of which are represented by reference numeral **428**) results in a diverted execution flow, wherein a proxy function **432** contained in the injected body of instructions **418** is called, instead (operation **532**). Such alteration may be carried out in a manner parallel to that described in connection with discussion of operation **524,** and for the sake of brevity is not reiterated here. The aforementioned proxy function **432** may be referred to herein as "Get_Proxy" **432.** The net result of operation **532** is that with each execution cycle of the thread message loop **423,** Get_Proxy **432** is called in lieu of the originally intended function or method **428** provided in the DLL **426** native to the operating system. The import of this is discussed below. According to some embodiments, in the event that the DLL **426** contains a quantity of *n* functions or methods to access, read, or withdraw keystroke data messages from the thread message queue **424,** then the body of injected instructions **418,** in fact, contains a quantity of *n* proxy functions or methods **432** - each such proxy function or method **432** corresponding to a function or method contained in the DLL **426** native to the operating system. Reference numeral **432** should be understood to refer to all such proxy functions or methods, according to such embodiments.

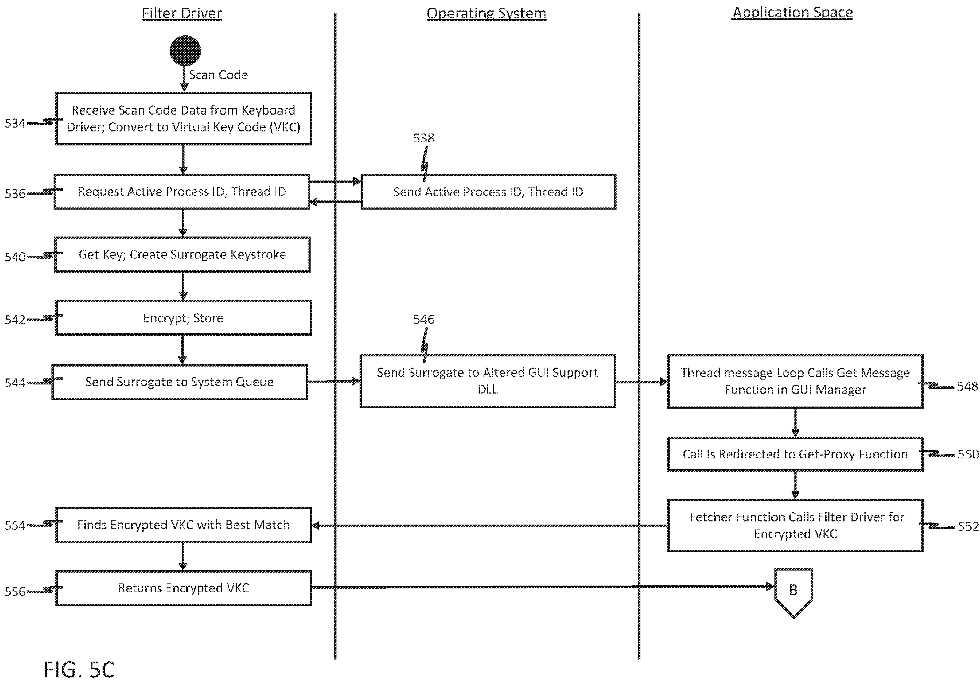

In the wake of having performed operation **506-532,** the system **400** is prepared to conduct its various security operations with the occurrence of each keystroke. Discussion now turns to Figure **5C****,** which depicts the actions of the system **400** in response to each keystroke. In response to depression or release of a key on the keyboard **402,** keystroke data is received by the filter driver **410,** as the result of the coordinated actions of the keyboard **402,** interrupt controller **404,** and keyboard device driver **408.** These actions have been described previously and are not reiterated here. The response of the filter driver **410** to receipt of such keystroke data is to store it temporarily, so that it may be acted upon as described pursuant to the ensuing operations (operation **534**). According to some embodiments, the filter driver **410** may receive scancode data from the keyboard device driver **408,** in which case it converts such scancode data into virtual key code data and then temporarily stores it.

In the wake of having completed operation **534,** the filter driver **410** calls the operating system to request that it return the process ID and thread ID of the particular process and thread that is currently in focus. (The particular window of the particular application to which user input, such as keystrokes and mouse clicks, is to be delivered is the window that is in focus; such application executes under the management of the operating system as a process - identified by a process ID - and such window runs pursuant to a thread of execution, identified by a thread ID). The operating system responds by returning the process ID and thread ID to the filter driver **410** (operation **538**). The result of operations **536** and **538** is that the filter driver acquires information identifying the particular thread and process that were in focus in the immediate wake of having received a keystroke datum, and can therefore associate the just-received keystroke datum with the aforementioned thread and process (example: "the just received keystroke datum should be delivered to thread *x* of process *y*. "). The aforementioned thread ID and process ID are stored in association with keystroke datum received in operation **534,** along with timestamp data. Thus, conceptually, keystroke data is stored in memory as:

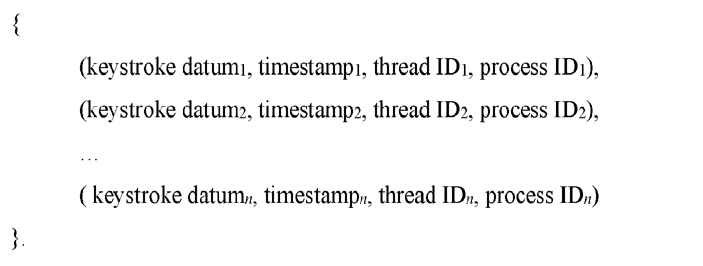

Next, in operation **540,** the filter driver **410** accesses the key storage facility **422** with the aforementioned process ID, and retrieves the particular encryption key that was associated therewith during execution of operation **514.** The filter driver **410** also invokes a surrogate keystroke constructor function or method **434** to produce a surrogate keystroke datum. The surrogate keystroke datum is uncorrelated to the keystroke datum received in operation **534** so that actual keystroke datum cannot be recovered from the surrogate. According to some embodiments, a surrogate is created with the occurrence of each keystroke datum received in operation **534.** Thus, if one considers a case in which a quantity of *n* keystrokes have been received by the filter driver **410,** then it is the case that the filter driver **410** will have created a quantity of *n* surrogates:
{surrogate₁, surrogate₂, ... surrogate*ₙ*}.

According to some embodiments, the constructor **434** operates in a pseudorandom manner so that a particular surrogate keystroke datum cannot be predicted in view of the surrogates previously generated by the constructor **434.** (Example: surrogate*ₙ* is not predictable in view of {surrogate₁, surrogate₂, ... surrogate_{*n*-1}}.). The surrogate keystroke datum is stored in association with the keystroke datum received in operation **534.** Therefore, in the wake of operation **540,** keystroke data is stored conceptually as:

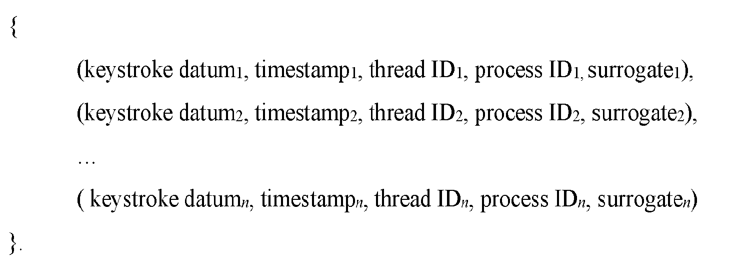

In operation **542** the keystroke datum received and stored in connection with operation **534** is encrypted with the use of an encryptor method or function **436.** According to some embodiments, it is encrypted using the key retrieved in operation **540** as an input to the encryption process, as well as the process ID received in operation **536** and the surrogate constructed in operation **540.** The encryptor **436** may operate by perturbing the bit structure of the keystroke datum in a deterministic manner, with the pattern of such perturbation being determined by a trio of data: encryption key, process ID, and surrogate keystroke datum. The output of the encryptor **436** is a ciphertext keystroke datum, which is stored so as to overwrite the keystroke datum stored during execution of operation **534.** Thus, in the wake of operation **542,** the keystroke data (encrypted at this stage of the process) is conceptually stored in memory as: 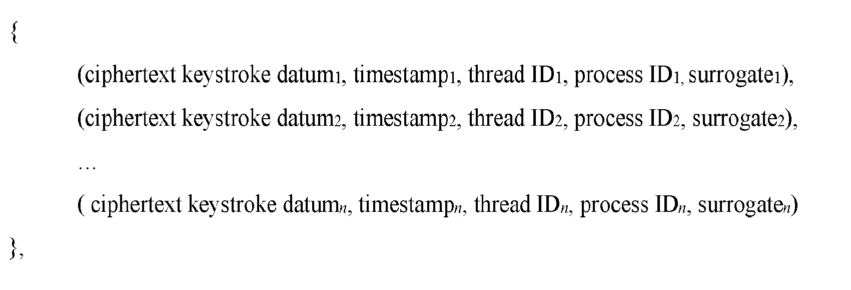 which is represented in Figure **4** by reference numeral **438.**

One purpose of the surrogate keystroke data is to introduce nonuniformity into the keystroke encryption process. Consider a set of keystroke data including a quantity of *n* keystrokes representing a depression of the letter "e" key on the keyboard **402.** It is preferable that each such ciphertext representation of the letter "e" differ from representation to representation, and do so in an unpredictable manner. Given that, according to some embodiments, the encryptor **436** uses the surrogate keystroke data as an input to determine its encryption process, and further given that the surrogates may be generated so as to exhibit pseudorandomness, it is the case that, according to these embodiments, the various ciphertext representations of the letter "e" would exhibit variation and unpredictability.

In operation **544,** the just-constructed surrogate keystroke datum is sent by the filter driver **410** to the system message queue **440** as a keystroke data message. The operating system responds by identifying the particular process and thread that are in focus, and then withdraws the keystroke data message (containing the surrogate) from the system message queue **440** and introduces it into the thread message queue **424** of the thread-process duo that were determined to be in focus (operation **546**).

As discussed previously, the thread message loop **423** of the application **412** runs in continual execution cycles. With each cycle, a reference **430** to the particular function or method **428** used to withdraw keystroke data messages from the queue **424** is executed, thereby initiating a call thereto (operation **548**). As a consequence of having diverted the execution flow of calls to the aforementioned function or method **428** to a proxy **432** in operation **532,** the proxy function or method **432** in the injected code **418** is invoked (operation **550**). The proxy function or method **432** responds to invocation by calling the particular function or method **428** used to withdraw keystroke data messages from the queue **424,** thereby causing that function or method **428** to execute, meaning that the aforementioned keystroke data message (containing the surrogate keystroke datum) is withdrawn from queue **424** and returned to caller, i.e., to the proxy **432.** The proxy **432** calls the filter driver **410** to initiate a process whereby the filter driver **410** returns the ciphertext keystroke datum corresponding to the surrogate (operation **552**). The proxy **432** uses the process ID and thread ID previously stored in connection with operation **520** (i.e., the process ID assigned to the application **412** and the thread ID assigned to the particular thread on which the body of instructions **418** is executing) as arguments to its call to the filter driver **410,** as well as the just-returned surrogate keystroke datum and a current timestamp. Recall that these same informational elements are stored in association with each ciphertext keystroke datum stored in connection with operation **542.**

The filter driver **410** responds to having been called in connection with operation **552** by searching the set of stored ciphertext keystroke data **438** for the particular datum associated with the closest matching timestamp, process ID, thread ID, and surrogate keystroke datum (operation **554**), and returning that particular ciphertext keystroke datum to the proxy function or method **432** (operation **556**). Next, the proxy function **432** passes the ciphertext keystroke datum to a decryptor function or method **442** that decrypts the ciphertext, thereby recovering the plaintext keystroke datum (operation **558**). According to some embodiments, the decryptor **442** uses the key stored in connection with operation **518,** the process ID stored in connection with operation **520,** and the surrogate keystroke datum received in connection with operation **554** as inputs that determine the decryption process. According to some embodiments, the decryptor **442** is structured to perturb the bit structure of the ciphertext datum in an inverse manner of perturbation of that used in connection with the encryption process of operation **542,** so that its operation results in proper recovery of the plaintext keystroke datum.

The decryptor **442** returns the plaintext keystroke datum to the reference instruction **430,** whereupon execution flow is returned to the thread message loop **423** (operation **560**). The thread message loop **423,** in turn, invokes the proper procedure **444** to handle the plaintext keystroke datum, and the user experiences an ordinary response to having input a keystroke despite its corresponding keystroke datum having traversed an atypical data route, and having been delivered into the application memory space **416** in an encrypted form.

The previous discussion reveals that, according to some embodiments, each application with which the keystroke security system **200** or **400** interoperates is assigned its own encryption key. Thus, keystroke data destined for one particular application are encrypted differently than those destined for another application. This is preferable because it may be the case that a particular application is compromised by a code supply chain attack. Under such circumstances, the developer of the compromised application may have unintentionally built a keylogger into its application. If this were the case, under some conditions, such a keylogger would have access to keystroke data delivered to the particular application into which it was unintentionally inserted. However, such a keylogger would be denied access to keystrokes from other applications, according to embodiments where unique keys are employed on an application-by-application basis. For example, if such a keylogger attempted to emulate the API calls employed by the injected code **212** or **418** to request keystroke data destined for other applications from the filter driver **210** or **410,** the keylogger would, at worst, receive ciphertext keystroke data bound for other applications, but would have no means for decrypting such cyphertext - the sole encryption key to which it would have access would not correspond to the key employed in connection with encryption of keystroke data destined for such other applications.

The previous discussion also teaches that, according to certain embodiments, the encryption key employed vis-à-vis each given process is created in the wake of each such process having been launched, with a one-to-one correspondence between a process ID and its particular encryption key. It is conceivable that certain processes may be long-running. According to some embodiments, a time limit may be imposed by either the filter driver or the injected body of software instructions, so as to expire an encryption key after such key has been in use by a given process for a period of time exceeding such time limit. Such expiration re-initiates a process of creating a replacement encryption key, and communicating such key to the aforementioned application so that it may be used in connection with encryption and decryption of keystroke data/ciphertext keystroke data.

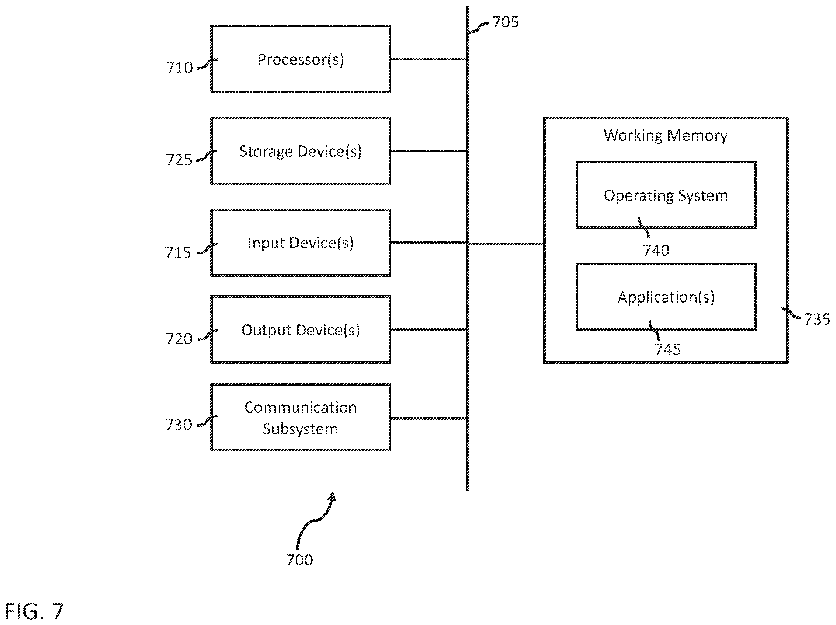

To perform the actions of the computing environment in which the system **100, 200** or **400** is situated, or execute any of the methods or schemes herein and/or embody any of the other previously mentioned computing devices or mobile devices or the like, a computer or mobile device or server system as illustrated in Figure **7** may be used. A networked system of such computers, devices or server systems may likewise be used. Figure **7** depicts a schematic illustration of one embodiment of a computer system **700** that can perform the methods provided by various other embodiments, as described herein, and/or can function as the host computer system, a server system, a laptop, tablet, smartphone, a mobile device, and/or a computer system. It should be noted that Figure **7** is meant only to provide a generalized illustration of various components, any or all of which may be utilized as appropriate. Figure **7****,** therefore, broadly illustrates how individual system elements may be implemented in a relatively separated or relatively more integrated manner.

The computer system **700** is shown comprising hardware elements that can be electrically coupled via a bus **705** (or may otherwise be in communication, as appropriate). The hardware elements may include one or more processors **710,** including without limitation one or more general-purpose processors and/or one or more special-purpose processors (such as digital signal processing chips, graphics acceleration processors, and/or the like); one or more input devices **715,** which can include without limitation a mouse, a keyboard, touchscreen and/or the like; and one or more output devices **720,** which can include without limitation a display device, a printer and/or the like.

The computer system **700** may further include (and/or be in communication with) one or more storage devices **725,** which can comprise, without limitation, local and/or network accessible storage, and/or can include, without limitation, a disk drive, a drive array, an optical storage device, a solid-state storage device such as a random access memory ("RAM") and/or a read-only memory ("ROM"), which can be programmable, flash-updateable and/or the like. Such storage devices may be configured to implement any appropriate data stores, including without limitation, various file systems, database structures, and/or the like.

The computer system **700** may also include a communications subsystem **730,** which can include without limitation a modem, a network card (wireless or wired), an infrared communication device, a wireless communication device and/or chipset (such as a BLUETOOTH^{™} device, an 802.11 device, a WiFi device, a WiMax device, cellular communication facilities, etc.), and/or the like. The communications subsystem **730** may permit data to be exchanged with a network (such as the network described below, to name one example), other computer systems, and/or any other devices described herein. In many embodiments, the computer system **700** will further comprise a working memory 735, which can include a RAM or ROM device, as described above.

The computer system **700** also can comprise software elements, shown as being currently located within the working memory **735,** including an operating system **740,** device drivers, executable libraries, and/or other code, such as one or more application programs **745,** which may comprise computer programs provided by various embodiments, and/or may be designed to implement methods, and/or configure systems, provided by other embodiments, as described herein. Merely by way of example, one or more procedures described with respect to the method(s) discussed above might be implemented as code and/or instructions executable by a computer (and/or a processor within a computer); in an aspect, then, such code and/or instructions can be used to configure and/or adapt a general purpose computer (or other device) to perform one or more operations in accordance with the described methods.

A set of these instructions and/or code might be stored on a computer-readable storage medium, such as the storage device(s) **725** described above. In some cases, the storage medium might be incorporated within a computer system, such as the system **700.** In other embodiments, the storage medium might be separate from a computer system (e.g., a removable medium, such as a compact disc), and or provided in an installation package, such that the storage medium can be used to program, configure and/or adapt a general purpose computer with the instructions/code stored thereon. These instructions might take the form of executable code, which is executable by the computer system **700** and/or might take the form of source and/or installable code, which, upon compilation and/or installation on the computer system **700** (e.g., using any of a variety of generally available compilers, installation programs, compression/decompression utilities, etc.) then takes the form of executable code.

It will be apparent to those skilled in the art that substantial variations may be made in accordance with specific requirements. For example, customized hardware might also be used, and/or particular elements might be implemented in hardware, software (including portable software, such as applets, etc.), or both. Further, connection to other computing devices such as network input/output devices may be employed.

As mentioned above, in one aspect, some embodiments may employ a computer system (such as the computer system **700**) to perform methods in accordance with various embodiments of the invention. According to a set of embodiments, some or all of the procedures of such methods are performed by the computer system **700** in response to processor **710** executing one or more sequences of one or more instructions (which might be incorporated into the operating system **740** and/or other code, such as an application program **745**) contained in the working memory **735.** Such instructions may be read into the working memory **735** from another computer-readable medium, such as one or more of the storage device(s) **725.** Merely by way of example, execution of the sequences of instructions contained in the working memory **735** might cause the processor or processors **710** to perform one or more procedures of the methods described herein.

The terms "machine-readable medium" and "computer-readable medium," as used herein, refer to any medium that participates in providing data that causes a machine to operate in a specific fashion. In an embodiment implemented using the computer system **700,** various computer-readable media might be involved in providing instructions/code to the processor or processors **710** for execution and/or might be used to store and/or carry such instructions/code (e.g., as signals). In many implementations, a computer-readable medium is a physical and/or tangible storage medium. Such a medium may take many forms, including but not limited to, non-volatile media, volatile media, and transmission media. Non-volatile media include, for example, optical and/or magnetic disks, such as the storage device(s) **725.** Volatile media include, without limitation, dynamic memory, such as the working memory **735.** Transmission media include, without limitation, coaxial cables, copper wire and fiber optics, including the wires that comprise the bus **705,** as well as the various components of the communication subsystem **730** (and/or the media by which the communications subsystem **730** provides communication with other devices). Hence, transmission media can also take the form of waves (including without limitation radio, acoustic and/or light waves, such as those generated during radio-wave and infrared data communications).

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, a carrier wave as described hereinafter, or any other medium from which a computer can read instructions and/or code.

Various forms of computer-readable media may be involved in carrying one or more sequences of one or more instructions to the processor or processors **710** for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system **700.** These signals, which might be in the form of electromagnetic signals, acoustic signals, optical signals and/or the like, are all examples of carrier waves on which instructions can be encoded, in accordance with various embodiments of the invention.

The communications subsystem **730** (and/or components thereof) generally will receive the signals, and the bus **705** then might carry the signals (and/or the data, instructions, etc. carried by the signals) to the working memory **735,** from which the processor(s) **705** retrieves and executes the instructions. The instructions received by the working memory **735** may optionally be stored on a storage device **725** either before or after execution by the processor(s) **710.**

The various embodiments described above are provided by way of illustration only and should not be construed to limit the invention. Those skilled in the art will readily recognize various modifications and changes that may be made to the present invention without departing from the scope of the present invention, which is set forth in the following claims.

## Claims

1. A system for securing keystroke data along a data path from a keyboard in data communication with a computer to an application executing on said computer, the system comprising:
A filter driver loaded in memory of said computer, wherein said filter driver is arranged as a part of a driver stack including a keyboard device driver in data communication with said keyboard, and wherein said filter driver includes a body of software instructions for injection into memory space of said application, said filter driver being configured to:
inject said body of software instructions into said memory space of said application;
receive said keystroke data from said keyboard device driver;
generate ciphertext data from said keystroke data; and
send said ciphertext data to said body of software instructions while said body of software instructions is loaded within said memory space of said application; and
said body of software instructions loaded within said memory space of said application, wherein said body of software instructions is configured to:
obtain said ciphertext data from said filter driver; and
recover said keystroke data from said ciphertext data.

2. The system of claim 1, wherein said filter driver is further configured to:
request a callback from an operating system executing on said computer, upon launch of said application; and
respond to said callback by injecting said body of software instructions into said memory space of said application.

3. The system of claim 2, wherein said filter driver is further configured to:
initiate invocation of an initialization function of said body of software instructions, after having injected said body of software instructions into said memory space of said application.

4. The system of claim 3, wherein said filter driver is further configured to:
generate an encryption key; and
pass said encryption key to said body of software instructions, while said body of software instructions is loaded within said memory space of said application.

5. The system of claim 4, wherein said body of software instructions is further configured to:
use said encryption key to recover said keystroke data from said ciphertext data.

6. The system of claim 4, wherein said filter driver is further configured to: use said encryption key to generate said ciphertext data.

7. The system of claim 1, wherein said filter driver is further configured to:
generate surrogate keystroke data in response to having received keystroke data from said keyboard device driver; and
pass said surrogate keystroke data to a system queue maintained by an operating system executing on said computer.

8. The system of claim 7, wherein said body of software instructions is further configured to:
call said filter driver to cause said filter driver to respond to said call by returning said ciphertext data.

9. The system of claim 8, wherein said body of software instructions is further configured to:
obtain said surrogate keystroke data; and
pass said surrogate keystroke data to said filter driver as an argument of said call to said filter driver.

10. The system of claim 1, wherein said body of software instructions is further configured to:
return said keystroke data, so that said keystroke data is returned to said application.

11. The system of claim 10, wherein said body of software instructions is further configured to:
return said keystroke data, so that said keystroke data is returned to a message loop of said application.

12. A method of securing keystroke data along a data path from a keyboard in data communication with a computer to an application executing on said computer, the method being performed by a filter driver and an injectable body of software instructions, said method comprising:
creating, with said filter driver, a driver stack that comprises said filter driver and a keyboard device driver;
injecting, with said filter driver, said injectable body of software instructions into a memory space assigned to said application;
receiving, with said filter driver, said keystroke data from said keyboard device driver;
generating, with said filter driver, ciphertext data from said keystroke data;
sending, with said filter driver, said ciphertext data to said body of software instructions that is injected within said memory space assigned to said application;
obtaining, with said body of software instructions that is injected within said memory space assigned to said application, said ciphertext data from said filter driver; and
recovering, with said body of software instructions that is injected within said memory space assigned to said application, said keystroke data from said ciphertext data.

13. The method of claim 12, wherein said keystroke data comprises one of scancode data, virtual key code data, ASCII data, Unicode data, or UTF-8 data.

14. The method of claim 12, further comprising:
requesting, with said filter driver, a callback from an operating system executing on said computer, upon launch of said application; and
responding, with said filter driver, to said callback by injecting said body of software instructions into said memory space of said application.

15. The method of claim 12, wherein said application does not include software instructions for recovering said keystroke data from said ciphertext data.

## Patentansprüche

1. System zur Sicherung von Tastenanschlagsdaten entlang eines Datenpfads von einer Tastatur, die in Datenkommunikation mit einem Computer steht, zu einer Anwendung die auf dem Computer ausgeführt wird, das System umfassend:
einen Filtertreiber, der in dem Speicher des Computers geladen wird, wobei der Filtertreiber als Teil eines Treiberstapels eingerichtet ist, der einen Tastaturgerät-Treiber umfasst, der in Datenkommunikation mit der Tastatur steht, und wobei der Filtertreiber eine Sammlung von Softwareanweisungen zur Einführung in den Speicherraum der Anwendung umfasst, wobei der Filtertreiber dazu konfiguriert ist, um:
die Sammlung von Softwareanweisungen in den Speicherraum der Anwendung einzuführen;
die Tastenanschlagsdaten von dem genannten Tastaturgerät-Treiber zu empfangen;
Chiffretextdaten aus den Tastenanschlagsdaten zu erzeugen; und
die Chiffretextdaten an die Sammlung von Softwareanweisungen zu senden, während die Sammlung von Softwareanweisungen in dem Speicherraum der Anwendung geladen wird; und
wobei die Sammlung von Softwareanweisungen, die in dem Speicherraum der Anwendung geladen wird, dazu konfiguriert ist, um:
die Chiffretextdaten von dem Filtertreiber zu erhalten; und
die Tastenanschlagsdaten aus den Chiffretextdaten rückzugewinnen.

2. System nach Anspruch 1, wobei der Filtertreiber ferner dazu konfiguriert ist, um:
einen Abruf von einem Betriebssystem, das auf dem Computer ausgeführt wird, anzufordern, beim Aufruf der Anwendung; und
auf den Abruf durch Einführung der Sammlung von Softwareanweisungen in den Speicherraum der Anwendung zu reagieren.

3. System nach Anspruch 2, wobei der Filtertreiber ferner dazu konfiguriert ist, um:
anzufangen, eine Anforderung einer Initialisierungsfunktion der Sammlung von Softwareanweisungen zu stellen, nachdem die Sammlung von Softwareanweisungen in den Speicherraum der Anwendung eingeführt wurde.

4. System nach Anspruch 3, wobei der Filtertreiber ferner dazu konfiguriert ist, um:
einen Verschlüsselungsschlüssel zu erzeugen; und
den Verschlüsselungsschlüssel an die Sammlung von Softwareanweisungen zu übergeben, während die Sammlung von Softwareanweisungen in dem Speicherraum der Anwendung beladet wird.

5. System nach Anspruch 4, wobei die Sammlung von Softwareanweisungen ferner dazu konfiguriert ist, um:
den Verschlüsselungsschlüssel zu verwenden, um die Tastenanschlagsdaten aus den Chiffretextdaten rückzugewinnen.

6. System nach Anspruch 4, wobei der Filtertreiber ferner dazu konfiguriert ist, um: den Verschlüsselungsschlüssel zu verwenden, um die Chiffretextdaten zu erzeugen.

7. System nach Anspruch 1, wobei der Filtertreiber der dazu konfiguriert ist, um:
Ersatz-Tastenanschlagsdaten als Reaktion auf den Empfang von Tastenanschlagsdaten von dem Tastaturgerät-Treiber zu erzeugen; und
die Ersatz-Tastenanschlagsdaten an eine Systemwarteschlange, die von einem Betriebssystem, das von dem Computer ausgeführt wird, gehalten wird, zu übergeben.

8. System nach Anspruch 7, wobei die Sammlung von Softwareanweisungen ferner dazu konfiguriert ist, um:
den Filtertreiber aufzurufen, um den Filtertreiber zu veranlassen, auf den Aufruf durch Rückgabe der Chiffretextdaten zu reagieren.

9. System nach Anspruch 8, wobei die Sammlung von Softwareanweisungen ferner dazu konfiguriert ist, um:
die Ersatz-Tastenanschlagsdaten zu erhalten; und
die Ersatz-Tastenanschlagsdaten an den Filtertreiber als ein Argument des Aufrufs an den Filtertreiber zu übergeben.

10. System nach Anspruch 1, wobei die Sammlung von Softwareanweisungen dazu konfiguriert ist, um:
die Tastenanschlagsdaten zurückzugeben, sodass die Tastenanschlagsdaten an die Anwendung zurückgegeben werden.

11. System nach Anspruch 10, wobei die Sammlung von Softwareanweisungen ferner dazu konfiguriert ist, um:
die Tastenanschlagsdaten zurückzugeben, sodass die Tastenanschlagsdaten an eine Ereignisschleife der Anwendung zurückgegeben werden.

12. Verfahren zur Sicherung von Tastenanschlagsdaten entlang eines Datenpfads von einer Tastatur, die in Datenkommunikation mit einem Computer steht, zu einer Anwendung, die auf dem Computer ausgeführt wird, wobei das Verfahren von einem Filtertreiber und einer einführbaren Sammlung von Softwareanweisungen durchgeführt wird, das Verfahren umfassend:
Erstellen, mit dem Filtertreiber, eines Treiberstapels, der den Filtertreiber und einen Tastaturgerät-Treiber umfasst;
Einführen, mit dem Filtertreiber, der einführbaren Sammlung von Softwareanweisungen in einen Speicherraum, der der Anwendung zugewiesen wird;
Empfangen, mit dem Filtertreiber, der Tastenanschlagsdaten von dem Tastaturgerät-Treiber;
Erzeugen, mit dem Filtertreiber, Chiffretextdaten aus den Tastenanschlagsdaten;
Senden, mit dem Filtertreiber, der Chiffretextdaten an die Sammlung von Softwareanweisungen, die in den Speicherraum eingeführt wird, der der Anwendung zugewiesen wird;
Erhalten, mit der Sammlung von Softwareanweisungen, die in den Speicherraum eingeführt wird, der der Anwendung zugewiesen wird, der Chiffretextdaten von dem Filtertreiber; und
Rückgewinnen, mit der Sammlung von Softwareanweisungen, die in den Speicherraum eingeführt wird, der der Anwendung zugewiesen wird, der Tastenanschlagsdaten aus den Chiffretextdaten.

13. Verfahren nach Anspruch 12, wobei die Tastenanschlagsdaten Scancode-Daten, virtuelle Tastencoden-Daten, ASCII-Daten, Unicode-Daten oder UTF-8-Daten umfassen.

14. Verfahren nach Anspruch 12, ferner umfassend:
Anfordern, mit dem Filtertreiber, eines Abrufs von einem Betriebssystem, das auf dem Computer ausgeführt wird, bei Aufruf der Anwendung; und
Reagieren, mit dem Filtertreiber, auf den Abruf durch Einführung der Sammlung von Softwareanweisungen in den Speicherraum der Anwendung.

15. Verfahren nach Anspruch 12, wobei die Anwendung keine Softwareanweisungen, zum Rückgewinnen der Tastenanschlagsdaten, aus den Chiffretextdaten umfasst.

## Revendications

1. Système de sécurisation de données de frappe le long d'un chemin de données depuis un clavier en communication de données avec un ordinateur vers une application s'exécutant sur ledit ordinateur, le système comprenant :
un pilote de filtrage chargé dans la mémoire dudit ordinateur, ledit pilote de filtrage étant agencé en tant que partie d'une pile de pilotes comprenant un pilote de dispositif de clavier en communication de données avec ledit clavier, et ledit pilote de filtrage comprenant un corps d'instructions logicielles destiné à être injecté dans l'espace mémoire de ladite application, ledit pilote de filtrage étant configuré pour :
injecter ledit corps d'instructions logicielles dans ledit espace mémoire de ladite application ;
recevoir lesdites données de frappe depuis ledit pilote de dispositif de clavier ;
générer des données chiffrées à partir desdites données de frappe ; et
envoyer lesdites données chiffrées audit corps d'instructions logicielles pendant que ledit corps d'instructions logicielles est chargé dans ledit espace mémoire de ladite application ; et
ledit corps d'instructions logicielles chargé dans ledit espace mémoire de ladite application, ledit corps d'instructions logicielles étant configuré pour :
obtenir lesdites données chiffrées depuis ledit pilote de filtrage ; et
restaurer lesdites données de frappe à partir desdites données chiffrées.

2. Le système selon la revendication 1, dans lequel ledit pilote de filtrage est en outre configuré pour :
demander un rappel d'un système d'exploitation s'exécutant sur ledit ordinateur, au lancement de ladite application ; et
répondre audit rappel en injectant ledit corps d'instructions logicielles dans ledit espace mémoire de ladite application.

3. Le système selon la revendication 2, dans lequel ledit pilote de filtrage est en outre configuré pour :
initier l'invocation d'une fonction d'initialisation dudit corps d'instructions logicielles, après avoir injecté ledit corps d'instructions logicielles dans ledit espace mémoire de ladite application.

4. Le système selon la revendication 3, dans lequel ledit pilote de filtrage est en outre configuré pour :
générer une clé de chiffrement ; et
transmettre ladite clé de chiffrement audit corps d'instructions logicielles, pendant que ledit corps d'instructions logicielles est chargé dans ledit espace mémoire de ladite application.

5. Le système selon la revendication 4, dans lequel ledit corps d'instructions logicielles est en outre configuré pour :
utiliser ladite clé de chiffrement pour restaurer lesdites données de frappe à partir desdites données chiffrées.

6. Le système selon la revendication 4, dans lequel ledit pilote de filtrage est en outre configuré pour :
utiliser ladite clé de chiffrement pour générer lesdites données chiffrées.

7. Le système selon la revendication 1, dans lequel ledit pilote de filtrage est en outre configuré pour :
générer des données de frappe de substitution en réponse à la réception de données de frappe depuis ledit pilote de dispositif de clavier ; et
transmettre lesdites données de frappe de substitution à une file d'attente système maintenue par un système d'exploitation s'exécutant sur ledit ordinateur.

8. Le système selon la revendication 7, dans lequel ledit corps d'instructions logicielles est en outre configuré pour :
appeler ledit pilote de filtrage afin d'amener ledit pilote de filtrage à répondre audit appel en retournant lesdites données chiffrées.

9. Le système selon la revendication 8, dans lequel ledit corps d'instructions logicielles est en outre configuré pour :
obtenir lesdites données de frappe de substitution ; et
transmettre lesdites données de frappe de substitution audit pilote de filtrage en tant qu'argument dudit appel audit pilote de filtrage.

10. Le système selon la revendication 1, dans lequel ledit corps d'instructions logicielles est en outre configuré pour :
retourner lesdites données de frappe, de sorte que lesdites données de frappe soient retournées à ladite application.

11. Le système selon la revendication 10, dans lequel ledit corps d'instructions logicielles est en outre configuré pour :
retourner lesdites données de frappe, de sorte que lesdites données de frappe soient retournées à une boucle de messages de ladite application.

12. Procédé de sécurisation de données de frappe le long d'un chemin de données depuis un clavier en communication de données avec un ordinateur vers une application s'exécutant sur ledit ordinateur, ledit procédé étant exécuté par un pilote de filtrage et un corps injectable d'instructions logicielles, ledit procédé comprenant :
la création, au moyen dudit pilote de filtrage, d'une pile de pilotes qui comprend ledit pilote de filtrage et un pilote de dispositif de clavier ;
l'injection, au moyen dudit pilote de filtrage, dudit corps injectable d'instructions logicielles dans un espace mémoire assigné à ladite application ;
la réception, au moyen dudit pilote de filtrage, desdites données de frappe depuis ledit pilote de dispositif de clavier ;
la génération, au moyen dudit pilote de filtrage, de données chiffrées à partir desdites données de frappe ;
l'envoi, au moyen dudit pilote de filtrage, desdites données chiffrées audit corps d'instructions logicielles injecté dans ledit espace mémoire assigné à ladite application ;
l'obtention, au moyen dudit corps d'instructions logicielles injecté dans ledit espace mémoire assigné à ladite application, desdites données chiffrées depuis ledit pilote de filtrage ; et
la restauration, au moyen dudit corps d'instructions logicielles injecté dans ledit espace mémoire assigné à ladite application, desdites données de frappe à partir desdites données chiffrées.

13. Le procédé selon la revendication 12, dans lequel lesdites données de frappe comprennent des données de code de balayage, des données de code de touche virtuelle, des données ASCII, des données Unicode ou des données UTF-8.

14. Le procédé selon la revendication 12, comprenant en outre :
la demande, au moyen dudit pilote de filtrage, d'un rappel depuis un système d'exploitation s'exécutant sur ledit ordinateur, au lancement de ladite application ; et
la réponse, au moyen dudit pilote de filtrage, audit rappel par l'injection dudit corps d'instructions logicielles dans ledit espace mémoire de ladite application.

15. Le procédé selon la revendication 12, dans lequel ladite application ne comprend pas d'instructions logicielles pour restaurer lesdites données de frappe à partir desdites données chiffrées.
